**Europäisches Patentamt**

**European Patent Office**

**Office européen des brevets**

(11) Veröffentlichungsnummer : **0 018 485**
**B1**

(12) **EUROPÄISCHE PATENTSCHRIFT**

(45) Veröffentlichungstag der Patentschrift :
**11.11.81**

(51) Int. Cl.³ : **B 60 T 17/22**

(21) Anmeldenummer : **80101271.7**

(22) Anmeldetag : **12.03.80**

(54) **Druckluftbetätigte Anzeigevorrichtung für den Anlegezustand von Schienenfahrzeug-Reibungsbremsen.**

(30) Priorität : **25.04.79 DE 2916772**

(43) Veröffentlichungstag der Anmeldung :
**12.11.80 (Patentblatt 80/23)**

(45) Bekanntmachung des Hinweises auf die Patenterteilung : **11.11.81 Patentblatt 81/45**

(84) Benannte Vertragsstaaten :
**AT CH DE FR GB IT SE**

(56) Entgegenhaltungen :
**AT - B 325 098**
**DE - C - 2 126 707**

(73) Patentinhaber : **Knorr-Bremse GmbH**
**Moosacher Strasse 80**
**D-8000 München 40 (DE)**

(72) Erfinder : **Krause, Georg**
**Stögerstrasse 10**
**D-8000 München 21 (DE)**

## Druckluftbetätigte Anzeigevorrichtung für den Anlegezustand von Schienenfahrzeug-Reibungsbremsen

Die Erfindung bezieht sich auf eine druckluftbetätigte Anzeigevorrichtung gemäß dem Gattungsbegriff des Patentanspruches 1.

Eine derartige Anzeigevorrichtung ist aus der DE-C-2 126 707 bekannt : Die dortige Sichtanzeige weist zum Verstellen ihrer Schauzeichen drei Kolben auf, deren erster vom Druck im Bremszylinder und deren zweiter vom durch ein Schaltventil überwachten Druck beaufschlagt ist, wobei das an den Vorratsluftbehälter der Bremse angeschlossene Schaltventil stellungsabhängig vom Kolben eines Bremszylinders schaltbar ist und wobei diese beiden Kolben je ein Schauzeichen betätigen. Der dritte Kolben ist vom Druck im Vorratsluftbehälter beaufschlagt und deckt mittels seines Schauzeichens bei mangelrdem Vorratsbehälterdruck die beiden anderen Schauzeichen zum Vermeiden einer Fehlanzeige ab.

Bei Anwendung dieser Anzeigevorrichtung an üblichen Drehgestellfahrzeugen mit am Fahrzeugrahmen angeordneten, pneumatischen Bremssteuerungsorganen und in den Drehgestellen angeordneten Bremszylindern mit diesen nachgeordneten Bremsgestängen sind neben der üblichen Schlauchverbindung zum Bremszylinder weitere, teuere, wartungsbedürftige und störanfällige Schlauchverbindungen und Rohrverbindungen für die pneumatische Verbindung des Schaltventils mit dem Vorratsbehälter und der am Fahrzeugrahmen anzuordnenden Sichtanzeige erforderlich. Weiterhin erfordert die bekannte Anzeigevorrichtung spezielle, mit dem Schaltventil kombinierte Bremszylinder; da für die vollständige Druckluftbremseinrichtung somit Bremszylinder mit und Bremszylinder ohne Schaltventil erforderlich sind, werden durch Steigern der Anzahl der Bremszylindertypen die Herstellungs-, Lagerhaltungs- und Wartungskosten der Bremszylinder gesteigert.

Schlauchverbindungen der vorstehend erwähnten Art sind auch bei Verwendung von Anzeigevorrichtungen nach beispielsweise der DE-B-1 220 464 oder DE-B-1 078 158 nötig, welche an einem Festpunktlager des Bremsgestänges angeordnete Schaltventile zeigen, da das Festpunktlager sich hierbei im Drehgestell befinden muß.

Weiterhin ist mit der AT-A-325 098 eine Anzeigevorrichtung bekannt geworden, welche vom mechanischen, handbetätigbaren Gestänge schaltbar ist. Hierbei ist ein elektrischer Schalter vorgesehen, der in Abhängigkeit von der Stellung einer mit einer von Hand drehbaren Gewindespindel verschraubten Mutter schaltbar ist und der seinerseits eine elektrisch betätigbare Sichtanzeige überwacht. Diese somit nur elektrisch betreibbare Anzeigevorrichtung benötigt die oftmals nicht vorhandene, elektrische Hilfsenergie und ist nicht mit einer pneumatischen Anzeigevorrichtung für den Bremszylinderdruck wirtschaftlich kombinierbar.

Der Erfindung liegt die Aufgabe zugrunde, eine Anzeigevorrichtung der eingangs genannten Art mit einfachen Mitteln derart auszugestalten, daß auch bei Anwendung in Drehgestellfahrzeugen mit am Fahrzeugrahmen angeordneten Bremssteuerungsorganen und im Drehgestell angeordneten Bremszylindern eine sichere Anzeige für den jeweiligen Bremsbetätigungszustand möglich ist, wobei jedoch besondere Schlauchverbindungen und/oder Rohrverbindungen im Drehgestell für die Anzeigevorrichtung vermeidbar sind.

Diese Aufgabe wird erfindungsgemäß durch eine Ausbildung der Anzeigevorrichtung gemäß den im Kennzeichen des Patentanspruches 1 angeführten Merkmalen gelöst. Hierbei ist es möglich, alle Teile der Anzeigevorrichtung am Fahrzeugrahmen bzw. Fahrzeuguntergestell anzuordnen, wodurch die zusätzlichen pneumatischen Rohre und Schlauchverbindungen zum bzw. im zum gegenüber dem Fahrzeuguntergestell beweglichen Drehgestell entfallen. Für das Personal bleibt die übliche Beobachtungsmöglichkeit bei Bremsproben erhalten ; da die Zeitspanne beim Bremsenlösen bis zum Rückgang der Kolben in den Bremszylindern nicht abgewartet werden muß, wird die Beobachtungszeit sogar verkürzt. Schließlich entfallen die bisher nötigen, speziellen Bremszylindertypen mit Schaltventil, wodurch die Bremszylinder verbilligt und die Fahrzeugwartung vereinfacht wird.

Nach weiteren Merkmalen der Erfindung vorteilhafte Ausgestaltungen der Anzeigevorrichtung sind den Unteransprüchen entnehmbar.

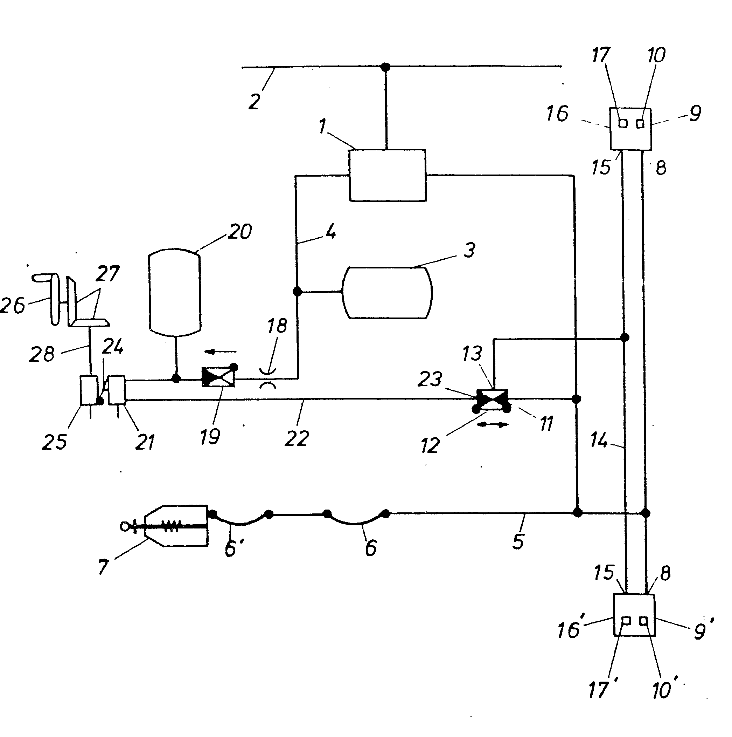

In der Zeichnung ist ein Ausführungsbeispiel einer nach der Erfindung ausgebildeten Anzeigevorrichtung schematisch dargestellt.

An ein Bremssteuerventil 1 sind in üblicher Weise eine Hauptluftleitung 2, eine zu einem Druckluftvorratsbehälter 3 führende Vorratsluftleitung 4 und eine einen Bremsdruck führende Bremsdruckleitung 5 angeschlossen. Die Bremsdruckleitung 5 ist über Schlauchverbindungen 6 und 6' mit einem Bremszylinder 7 und mit den Steuereingängen 8 zweier an gegenüberliegenden Fahrzeuglängsseiten montierter Sichtanzeigen 9 und 9' verbunden. Die Schlauchverbindung 6 führt vom Fahrzeuguntergestell zum Drehgestell und nimmt die Bewegungen zwischen beiden auf und die Schlauchverbindung 6' nimmt die Bewegungen zwischen dem Drehgestell und dem in diesem beweglich gelagerten Bremszylinder 7 auf. Die Sichtanzeigen 9 und 9' weisen je ein vom Druckzustand an ihren Steuereingängen 8 verstellbares Schauzeichen 10 bzw. 10' auf. Weiterhin ist an die Bremsdruckleitung 5 ein Eingangsanschluß 11 eines Doppelrückschlagventils 12 angeschlossen. Vom Ausgangsanschluß 13 des Doppelrückschlagventils 12 führt eine Leitung 14 zu den Steuereingängen 15 zweier weiterer Sichtanzeigen 16 und 16' mit Schauzeichen 17 und 17', deren jeweils eine Sichtanzeige 16 bzw. 16' mit einer Sichtanzeige 9 bzw. 9' zu einem Gerät haulich kombiniert ist.

An die Vorratsluftleitung 4 ist über eine Düse 18 und ein Rückschlagventil 19 ein kleiner Luftbehälter 20 von beispielsweise 5 l Volumen angeschlossen, welcher nur der Druckluftversorgung der Anzeigevorrichtung dient. An den Luftbehälter 20 ist über ein Absperrventil 21 mit Entlüftung eine Leitung 22 angeschlossen, die zum zweiten Eingangsanschluß 23 des Doppelrückschlagventils 12 führt. Das Absperrventil 21 ist über einen Taster 24 in Abhängigkeit von der Ortslage einer dem Handbremsgestänge zugehörenden Mutter 25 betätigbar, wobei es nur in seinem unbetätigten Zustand die ansonsten über seine Entlüftung drucklos gehaltene Leitung 22 unter Absperren der Entlüftung an den Luftbehälter 20 anschließt. Das Doppelrückschlagventil 12 verbindet jeweils einen seiner beiden Eingangsanschlüsse 11 oder 23 mit dem Ausgangsanschluß 13.

Das Handbremsgestänge ist wie üblich ausgebildet und weist u.a. ein Handrad 26 auf, mittels welchem über ein Kegelradgetriebe 27 eine Gewindespindel 28 willkürlich drehbar ist ; die Mutter 25 ist mit der Gewindespindel 28 verschraubt und an ihr greifen nicht dargestellte Kraftübertragungsorgane an, die zur ebenfalls nicht gezeigten, sowohl durch Druckbeaufschlagen des Bremszylinders 7 wie durch entsprechendes Betätigen des Handrades 26 zuspannbaren Reibungsbremse führen. Der Taster 24 ist derart angeordnet, daß er das Absperrventil 21 bei gelöster Handbremse entsprechender Lage der Mutter 25 betätigt, bei aus dieser Lage in Richtung eines handbetätigten Zuspannens der Reibungsbremse verstellter Mutter 25 über den ganzen Betätigungsbereich der Handbremse dagegen unbetätigt hält.

Abweichend von der vorstehend beschriebenen Ausführung können das Absperrventil bzw. der Taster auch derart angeordnet werden, daß der Taster das Absperrventil bei gelöster Handbremse entsprechender Lage der Mutter 25 unbetätigt, bei aus dieser Lage verstellter Mutter 25 dagegen betätigt hält ; das Absperrventil ist bei dieser Anordnung derart ausgebildet, daß es nur in seinem betätigten Zustand die ansonsten drucklos gehaltene Leitung 22 mit dem Luftbehälter 20 verbindet.

Alle aus der Zeichnung ersichtlichen Teile der Anzeigevorrichtung und der Fahrzeugbremsanlage, mit Ausnahme der Schlauchverbindung 6, 6' und des Bremszylinders 7, sind am Fahrzeugrahmen bzw. Fahrzeuguntergestell angeordnet ; der Bremszylinder 7 befindet sich im gegenüber diesem beweglichen Drehgestell und die Schlauchverbindung 6 dient als bewegliche Verbindung zwischen der Bremsdruckleitung 5 und dem Bremszylinder 7. Alle für die Anzeigevorrichtung erforderlichen Teile und Anschlüsse befinden sich somit am Fahrzeugrahmen und es müssen somit keine beweglichen Schlauchverbindungen für sie vorgesehen werden.

Die Sichtanzeigen 9, 9' werden wie üblich in Abhängigkeit von der Druckluftbeaufschlagung des Bremszylinders 7 und die Sichtanzeigen 16, 16' ebenfalls von dieser Bremszylinderdruckbeaufschlagung und, parallel hierzu, bei betätigter Handbremse betätigt. Die Abtrennung des Luftbehälters 20 durch das Rückschlagventil 19 vom Druckluftvorratsluftbehälter 3 ermöglicht eine ausreichend sichere Betätigung der Sichtanzeigen 16, 16' ; selbstverständlich ist es aber möglich, zusätzlich eine bei Druckluftmangel ansprechende Sicherheitseinrichtung gemäß DE-C-2 126 707 in Art einen Abdeckung für die Sichtanzeigen 9, 9' und/oder 16, 16' vorzusehen.

In Abänderung zu den beschriebenen Ausführungen kann die Düse 18 bei Verzicht auf eine nachgeordnete Füllung des Luftbehälters 20 insbesondere während des ersten Auffüllens der Druckluftbremsanlage entfallen : Mangels irgendwelcher Schlauchverbindungen in der Anzeigevorrichtung besteht in dieser keine Gefahr einer Entleerung des Druckluftvorratsbehälters 3 durch Schlauchbruch und die Düse 18 muß somit keine Sicherheitsfunktion erfüllen.

Das Doppelrückschlagventil 12 kann in üblicher Weise derart ausgebildet sein, daß es seinen den jeweils höheren Druck führenden Eingangsanschluß 11 oder 23 mit dem Ausgangsanschluß 13 verbindet. Zweckmäßiger ist es jedoch das Doppelrückschlagventil 12 in bekannter Art, beispielsweise durch Verwendung eines Differentialkolbens als Steuerorgan, so auszubilden, daß es seinen Eingangsanschluß 23 bevorzugt mit dem Ausgangsanschluß 13 verbindet, auch wenn am Eingangsanschluß 23 ein niedrigerer Druck als am Eingansanschluß 11 ansteht. Erst bei Überschreiten einer im normalen Betrieb der Druckluftbremsanlage nicht auftretenden, relativ großen Druckdifferenz zwischen den an beiden Eingangsanschlüssen 11 und 23 herrschenden Drücken verbindet das so augebildete Doppelrückschlagventil 12 den Eingangsanschluß 11 mit dem Ausgangsanschluß 13. Hierdurch wird eine Mittelstellung des Doppelrückschlagventils vermieden.

Bezugszeichenliste

1 Bremssteuerventil
2 Hauptluftleitung
3 Druckluftvorratsbehälter
4 Vorratsluftleitung
5 Bremsdruckleitung
6, 6' Schlauchverbindung
7 Bremszylinder
8 Steuereingang
9, 9' Sichtanzeige
10, 10' Schauzeichen
11 Eingangsanschluß
12 Doppelrückschlagventil
13 Ausgangsanschluß
14 Leitung
15 Steuereingang
16, 16' Sichtanzeige
17, 17' Schauzeichen

18 Düse
19 Rückschlagventil
20 Luftbehälter
21 Absperrventil
22 Leitung
23 Eingangsanschluß
24 Taster
25 Mutter
26 Handrad
27 Kegelradgetriebe
28 Gewindespindel

**Ansprüche**

1. Druckluftbetätigte Anzeigevorrichtung für den Anlegezustand von Schienenfahrzeug-Reibungsbremsen, welche in Abhängigkeit von der pneumatischen oder mechanischen Betätigung der mindestens einen druckluftbeaufschlagbaren Bremszylinder (7) aufweisenden Reibungsbremse mit dem im Bremszylinder herrschenden Druck (Leitung 5) beschickt wird und welche wenigstens zwei von Druckluft entgegen Federkraft verstellbare Sichtanzeigen (9, 9') mit jeweils einem in eine Schauöffnung bewegbaren Schauzeichen (10, 10' ; 17, 17') aufweist, wobei wenigstens ein Schauzeichen vom im Bremszylinder herrschenden Druck beaufschlagt ist, dadurch gekennzeichnet, daß der Druckluftanschluß (15) der zweiten Sichtanzeige (16, 16') an den Ausgangsanschluß (13) eines Doppelrückschlagventils (12) angeschlossen ist, dessen einer Eingangsanschluß (11) mit dem Bremszylinder (7) und dessen anderer Eingangsanschluß (23) mit einem Absperrventil (21) mit Entlüftung pneumatisch verbunden ist, wobei das Doppelrückschlagventil (12) einen Durchgang von jeweils einem seiner Eingangsanschlüsse (11 oder 23) zum Ausgangsanschluß (13) unter Absperren des zweiten Eingangsanschlusses (23 oder 11) freigibt und wobei das andererseits an eine ständig Druckluft führende Druckluftquelle (20) angeschlossene Absperrventil (21) vor einem Gestänge (Mutter 25) für die mechanische Betätigung der Reibungsbremse schaltbar ist und nur in dessen Arbeitsstellung geöffnet ist.

2. Anzeigevorrichtung nach Anspruch 1, dadurch gekennzeichnet, daß die Druckluftquelle ein über eine Düse (18) und ein Rückschlagventil (19) an den Druckluftvorratsbehälter (3) der Schienenfahrzeug-Reibungsbremse angeschlossener Luftbehälter (20) ist.

3. Anzeigevorrichtung nach Anspruch 1 oder 2, dadurch gekennzeichnet, daß das Absperrventil (21) von einem nahe einer Handbetätigungseinrichtung des Gestänges befindlichen Gestängeteil schaltbar ist.

4. Anzeigevorrichtung nach Anspruch 3, wobei das Gestänge eine von Hand drehbare Schraubspindel und eine mit dieser verschraubte Mutter aufweist, dadurch gekennzeichnet, daß das Absperrventil (21) in Abhängigkeit von der Ortslage der Mutter (25) schaltbar ist.

5. Anzeigevorrichtung nach Anspruch 1, dadurch gekennzeichnet, daß das Doppelrückschlagventil (12) den Durchgang von seinem mit dem Absperrventil (21) verbundenen Eingangsanschluß (23) zu seinem Ausgangsanschluß (13) bevorzugend ausgebildet ist.

**Claims**

1. A pneumatic indicating device for the state of application of rail vehicle friction brakes, which is loaded with the pressure in the brake cylinder (pipe 5) as a function of the pneumatic or mechanical actuation of the friction brake, which possesses at least one brake cylinder (7) to which compressed air is applied, the said pneumatic indicating device having not less than two visual displays (9, 9') which can be adjusted by means of compressed air against the force of the spring, each of these displays possessing an indicator (10, 10', 17, 17') which can be moved to a visual opening, the pressure in the brake cylinder being applied to at least one of the aforementioned indicators, and further possessing the characteristic feature that the compressed air port (15) of the second visual display (16, 16') is connected to the output port (13) of a twin check valve (12), one input port (11) of which is pneumatically connected to the brake cylinder (7) and the other input port (23) of which is pneumatically connected to a gate valve (21) with venting, the said twin check valve (12) opening a passage from one of its input ports (11 or 23) to the output port (13) while blocking off the second input port (23 or 11), whereby the gate valve (21), which is connected to a constant compressed air source (20), can be switched by means of a rod (nut 25) for the mechanical actuation of the friction brake and is only opened in its operating position.

2. Pneumatic indicating device as claimed in Claim 1, possessing the characteristic feature that the compressed air source is an air reservoir (20) connected to the compressed air reservoir (3) of the rail vehicle friction brake by way of a nozzle (18) and a check valve (19).

3. Pneumatic indicating device as claimed in Claim 1 or 2, possessing the characteristic feature that the gate valve (21) can be switched by a rod section located adjacent to a manual actuating device of the rodding.

4. Pneumatic indicating device as claimed in Claim 3, in which the rod has a screw which can be rotated manually and a nut which is fastened to the aforementioned screw, possessing the characteristic feature that the gate valve (21) can be switched in accordance with the position to which the nut (25) is turned.

5. Pneumatic indicating device as claimed in Claim 1, possessing the characteristic feature that the twin check valve (12) is arranged in such a way that the passage from its input port (23), which is connected to the gate valve (21), to the output port (13) is taken.

## Revendications

1. Système d'affichage pneumatique signalant le serrage de freins à frottement de véhicules ferroviaires, lequel, par la commande pneumatique ou mécanique du frein comportant au moins un cylindre de frein pneumatique (7), est alimenté en air comprimé (conduite 5) sous la pression régnant dans le cylindre de frein, et qui comprend au moins deux visualisateurs (9, 9') commandés par air comprimé contre l'action de ressorts et comportant chacun un volet indicateur (10, 10' ; 17, 17') mobile derrière une ouverture, dont au moins un volet est mû par la pression régnant dans le cylindre de frein, caractérisé par le fait que le raccord pneumatique (15) du deuxième visualisateur (16, 16') est relié à la sortie (13) d'une double valve (12) dont une entrée (11) est reliée pneumatiquement au cylindre de frein (7), et l'autre entrée (23), à une soupape d'arrêt (21) avec mise à l'atmosphère, la double valve (12) libérant le passage de l'une de ses entrées (11 ou 23) vers sa sortie (13) en bloquant l'autre entrée (23 ou 11), et la soupape d'arrêt (21) reliée à une source pneumatique (20) continuellement sous pression, étant actionnée par un mécanisme (écrou 25) assurant la commande mécanique du frein et l'ouverture de la soupape seulement en position de travail.

2. Système d'affichage selon la revendication 1, caractérisé par le fait que la source pneumatique est constituée par un réservoir (20) relié au réservoir d'air auxiliaire (3) du frein du véhicule par l'intermédiaire d'un étranglement (18) et d'un clapet antiretour (19).

3. Système d'affichage selon la revendication 1 ou 2, caractérisé par le fait que la soupape d'arrêt (21) est commandée par un élément de la timonerie à proximité du mécanisme de commande manuelle de cette timonerie.

4. Système d'affichage selon la revendication 3, la timonerie comprenant une vis de transformation de mouvement et un écrou déplacé par cette vis, caractérisé par le fait que la soupape d'arrêt (21) est actionnée par la position de l'écrou (25).

5. Système d'affichage selon la revendication 1, caractérisé par le fait que la double valve (12) est conçue de sorte à laisser de préférence le passage libre entre son entrée (23) reliée à la soupape d'arrêt (21) et sa sortie (13).